# EUROPÄISCHE PATENTSCHRIFT

(11) **EP 3 204 187 B1**
(45) Veröffentlichungstag und Bekanntmachung des Hinweises auf die Patenterteilung: **30.01.2019**
(21) Anmeldenummer: 15808372.5
(22) Anmeldetag: 08.12.2015
(51) Int. Cl.: F01D 5/30, F01D 25/28, F01D 5/22, B23Q 3/06, B23P 19/02, B25B 5/14

(54) **VERFAHREN ZUR MONTAGE VON LAUFSCHAUFELN AN EINER ROTORSCHEIBE SOWIE ZUGEHÖRIGE SPANNVORRICHTUNG ZUR DURCHFÜHRUNG EINES SOLCHEN VERFAHRENS**
METHOD FOR MOUNTING ROTOR BLADES ONTO A ROTOR DISK, AND CORRESPONDING TENSIONING DEVICE FOR PERFORMING SUCH A METHOD
PROCÉDÉ DE MONTAGE D'AUBES ROTORIQUES SUR UN DISQUE DE ROTOR ET TENSIONNEUR ASSOCIÉ DESTINÉ À METTRE EN OEUVRE UN TEL PROCÉDÉ

(30) Priorität: 12.01.2015 EP 15150757
(43) Veröffentlichungstag der Anmeldung: 16.08.2017
(73) Patentinhaber: Siemens Aktiengesellschaft, 80333 München (DE)
(72) Erfinder: HOFSOMMER, Daniel, 14513 Teltow (DE)
(86) Internationale Anmeldenummer: PCT/EP2015/078905
(87) Internationale Veröffentlichungsnummer: WO 2016/113041

(56) Entgegenhaltungen:
- WO-A1-2010/040338
- JP-A- 2007 064 074

## Beschreibung

Die vorliegende Erfindung betrifft ein Verfahren zur Montage von Laufschaufeln an einer Rotorscheibe entlang eines vorbestimmten Teilkreisdurchmessers derart, dass Deckbänder benachbarter Laufschaufeln im bestimmungsgemäß an der Rotorscheibe montierten und kalten Zustand gegeneinander mit einer vorbestimmten Vorspannung verspannt sind. Ein solches Verfahren geht z.B. aus der JP 2007 064 074 A hervor. Ferner betrifft die vorliegende Erfindung eine Spannvorrichtung zur Durchführung eines solchen Verfahrens.

JP 2007 064074 A offenbart ein Verfahren zur Montage von Laufschaufeln an einer Rotorscheibe entlang eines vorbestimmten Teilkreisdurchmessers derart, dass Deckbänder benachbarter Laufschaufeln im bestimmungsgemäß an der Rotorscheibe montierten und kalten Zustand gegeneinander mit einer vorbestimmten Vorspannung verspannt sind, wobei das Verfahren die aufeinander folgenden Schritte aufweist:
- Zwischenmontage aller Laufschaufel außer einer letzten Laufschaufel an der Rotorscheibe in demjenigen Zustand, in dem die Deckbänder der Laufschaufeln nicht mit der vorbestimmten Vorspannung gegeneinander verspannt sind,
- Montieren nur einer letzten Laufschaufel an einem zugeordneten Spannelement einer Spannvorrichtung derart, dass diese Laufschaufel entlang eines ersten Teilkreisdurchmessers angeordnet ist, der größer als der vorbestimmte Teilkreisdurchmesser ist, wobei das Deckband der an den Spannelement gehaltenen Laufschaufel gegen das Deckband der benachbarten Laufschaufel nicht oder mit einer Vorspannung verspannt ist, die geringer als die vorbestimmte Vorspannung ist,
- Bewegen des Spannelements radial einwärts, bis die Laufschaufel entlang eines zweiten Teilkreisdurchmessers angeordnet sind, der dem vorbestimmten Teilkreisdurchmesser entspricht, wobei das Deckband der Laufschaufel während der radialen Einwärtsbewegung des Spannelements bis zum Erreichen der vorbestimmten Vorspannung gegen das Deckband der benachbarten Laufschaufel verspannt wird.

JP 2007 064074 A offenbart auch eine entsprechende Spannvorrichtung, die ein einziges um eine zentrale Achse angeordnetes Spannelement aufweist, (wobei diese Anzahl der Anzahl der an der Rotorscheibe zu montierenden Laufschaufeln nicht entspricht) und das jeweils zur Aufnahme einer Laufschaufel ausgelegt ist, wobei das Spannelement zur Durchführung des Schrittes axial unter Ausübung einer radial einwärts gerichteten Kraft bewegbar ist.

Rotorscheiben mit daran gehaltenen Laufschaufeln sind im Stand der Technik in unterschiedlichsten Ausgestaltungen bekannt. Sie werden beispielsweise in Gasturbinen eingesetzt. Die Laufschaufeln weisen jeweils einen Schaufelfuß, ein Schaufelblatt sowie ein äußeres Deckband auf und sind entlang eines vorbestimmten Teilkreisdurchmessers gleichmäßig verteilt an der Rotorscheibe befestigt. Hierzu sind die Schaufelfüße in an der Rotorscheibe ausgebildeten Schaufelfußaufnahmenuten aufgenommen.

Während des Betriebs sind die Schaufelblätter dynamischen Belastungen ausgesetzt, was zu schädlichen Schwingungen und zu einer Ermüdung bei hoher Lastspielzahl führen kann. Dies gilt insbesondere für lange schlanke Schaufelblätter, deren Eigenfrequenzen während des Turbinenbetriebs häufig im Bereich der Erregungsfrequenzen liegen. Diesem Problem kann dadurch begegnet werden, dass Deckbänder benachbarter Laufschaufeln mittels entsprechender Verbindungselemente miteinander verbunden und im kalten Zustand gegeneinander verspannt werden. Auf diese Weise kann bei geringeren Drehzahlen ein inniger Kontakt zwischen den Deckbändern gewährleistet und die Eigenfrequenz entsprechend manipuliert werden. Die Vorspannung kann beispielsweise erzielt werden, indem die Laufschaufeln während ihrer Montage bezogen auf ihre Längsachse tordiert werden. Hierzu werden die Schaufelfüße der Laufschaufeln beispielsweise einige Millimeter in die Schaufelfußaufnahmenuten der Rotorscheiben eingesetzt und dann mit einem Hammer oder einer Presse rundherum in die Schaufelfußaufnahmenuten gedrückt. Aufgrund der für die Erzeugung der Vorspannung erforderlichen Kräfte sind diesem Verfahren bezogen auf die Höhe der erzielbaren Vorspannung allerdings Grenzen gesetzt.

Ausgehend von diesem Stand der Technik ist es eine Aufgabe der vorliegenden Erfindung, ein alternatives Verfahren der eingangs genannten Art sowie eine Spannvorrichtung zur Durchführung eines solchen Verfahrens zu schaffen.

Zur Lösung dieser Aufgabe schafft die vorliegende Erfindung ein Verfahren der eingangs genannten Art, das die aufeinanderfolgenden Schritte aufweist:
a) Montieren jeder Laufschaufel an einem zugeordneten Spannelement einer Spannvorrichtung derart, dass die Laufschaufeln entlang eines ersten Teilkreisdurchmessers angeordnet sind, der größer als der vorbestimmte Teilkreisdurchmesser ist, wobei die Deckbänder der an den Spannelementen gehaltenen Laufschaufeln gegeneinander nicht oder mit einer Vorspannung verspannt sind, die geringer als die vorbestimmte Vorspannung ist,
b) Bewegen der Spannelemente radial einwärts, bis die Laufschaufeln entlang eines zweiten Teilkreisdurchmessers angeordnet sind, der dem vorbestimmten Teilkreisdurchmesser entspricht, wobei die Deckbänder der Laufschaufeln während der radialen Einwärtsbewegung der Spannelemente bis zum Erreichen der vorbestimmten Vorspannung gegeneinander verspannt werden, und
c) Montage der Laufschaufeln an der Rotorscheibe in demjenigen Zustand, in dem die Deckbänder der Laufschaufeln mit der vorbestimmten Vorspannung gegeneinander verspannt sind.

Mit anderen Worten werden die Laufschaufeln in einem ersten Schritt an Spannelementen einer separaten Spannvorrichtung entlang eines ersten Teilkreisdurchmessers montiert, der größer als der Teilkreisdurchmesser ist, mit dem die Laufschaufeln letztendlich an der Rotorscheibe montiert werden sollen. Die Montage erfolgt vorteilhaft derart, dass die Deckbänder der an den Spannelementen gehaltenen Laufschaufeln gar nicht gegeneinander verspannt sind. Entsprechend kann die Montage der Laufschaufeln an den zugeordneten Spannelementen in einfacher Art und Weise erfolgen. Alternativ ist es aber auch möglich, die Deckbänder der Laufschaufeln mit einer Vorspannung an den zugeordneten Spannelementen zu montieren, die geringer als die vorbestimmte Vorspannung ist. Auf diese Weise wird die Montage der Laufschaufeln an der Spannvorrichtung gegenüber einer direkten Montage der Laufschaufeln an der Rotorscheibe zumindest erleichtert. In Schritt b) werden die an der Spannvorrichtung gehaltenen Laufschaufeln dann mit der vorbestimmten Vorspannung gegeneinander verspannt, während sie ausgehend von dem ersten Teilkreisdurchmesser radial einwärts in Richtung des zweiten Teilkreisdurchmessers bewegt werden, der dem vorbestimmten Teilkreisdurchmesser entspricht, mit dem die Laufschaufeln entlang der Rotorscheibe montiert werden sollen. Während dieser Bewegung werden die Deckbänder der benachbart angeordneten Laufschaufeln mit zunehmendem Druck gegeneinander gedrückt, wodurch die gewünschte Vorspannung erzielt wird. In Schritt c) erfolgt dann die Montage der Laufschaufeln an der Rotorscheibe in demjenigen Zustand, in dem ihre Deckbänder mit der vorbestimmten Vorspannung gegeneinander verspannt sind. Mit anderen Worten werden in Schritt c) die Laufschaufeln von der Spannvorrichtung auf die Rotorscheibe bewegt.

Gemäß einer Ausgestaltung des erfindungsgemäßen Verfahrens wird die vorbestimmte Vorspannung in Schritt b) zumindest teilweise durch eine Torsionsbewegung der Laufschaufeln um ihre Längsachse erzeugt. Auf diese Weise wird ein fester Halt zwischen den Deckbändern der Laufschaufeln erzielt. Eine solche Torsionsbewegung kann beispielsweise hervorgerufen werden, indem eine sich im Wesentlichen in axialer Richtung erstreckende Mittellinie eines radial innen liegenden Bereiches und eine sich im Wesentlichen in axialer Richtung erstreckende Mittellinie eines radial außen liegenden Bereiches jeder Laufschaufel mit einem gezielten Versatz gefertigt werden, der dann in Schritt b) unter Erzeugung einer Torsionsspannung aufgehoben wird.

Bevorzugt umfasst jede Laufschaufel einen Schaufelfuß, wobei die Rotorscheibe und die Spannelemente jeweils zu den Schaufelfüßen korrespondierend ausgebildete Schaufelfußaufnahmenuten aufweisen, die nach Durchführung des Schrittes b) derart miteinander fluchtend angeordnet werden können, dass die an den Spannelementen gehaltenen Laufschaufeln in Schritt c) aus den Schaufelaufnahmenuten der Spannvorrichtung in die Schaufelaufnahmenuten der Rotorscheibe geschoben werden können. Entsprechend lassen sich die Laufschaufeln verhältnismäßig einfach von der Spannvorrichtung auf die Rotorscheibe aufschieben.

Gemäß einer Ausgestaltung der vorliegenden Erfindung sind die Deckbänder benachbarter Laufschaufeln an ihren zueinander weisenden radialen Stirnflächen mit korrespondierenden Verbindungselementen versehen sind, die in radialer Richtung miteinander in Eingriff gebracht werden können und in axialer Richtung einen Hinterschnitt definieren. Durch eine solche Verbindung benachbarter Deckbänder wird der Zusammenhalt der Laufschaufeln im montierten Zustand weiter verbessert. Ferner kann die Eigenfrequenz der Laufschaufeln während des bestimmungsgemäßen Betriebs auf diese Weise ergänzend manipuliert werden. Darüber hinaus können derartige Verbindungen auch das Erzeugen der vorbestimmten Vorspannung unterstützen.

Bevorzugt sind korrespondierende Verbindungselemente durch einen Vorsprung und eine korrespondierend zum Vorsprung ausgebildete Ausnehmung gebildet. Auf diese Weise wird ein einfacher Aufbau erzielt.

Vorteilhaft erstreckt sich der Vorsprung jeweils über die gesamte axiale Breite eines Deckbandes und weist insbesondere die Form einer in Umfangsrichtung weisenden Pfeilspitze auf.

Zur Lösung der eingangs genannten Aufgabe schafft die vorliegende Erfindung ferner eine Spannvorrichtung zur Durchführung eines erfindungsgemäßen Verfahrens, die mehrere gleichmäßig verteilt um eine zentrale Achse angeordnete Spannelemente aufweist, deren Anzahl der Anzahl der an der Rotorscheibe zu montierenden Laufschaufeln entspricht und die jeweils zur Aufnahme einer Laufschaufel ausgelegt sind, wobei die Spannelemente zur Durchführung des Schrittes b) radial unter Ausübung einer radial einwärts gerichteten Kraft bewegbar sind.

Bevorzugt sind die Spannelemente mit Schaufelfußaufnahmenuten versehen, die jeweils zur Aufnahme eines Schaufelfußes einer Laufschaufel ausgelegt sind.

Vorteilhaft ist zumindest eine Arretiereinrichtung vorgesehen, die zum Arretieren der entlang des zweiten Teilkreisdurchmessers angeordneten Spannelemente ausgelegt ist.

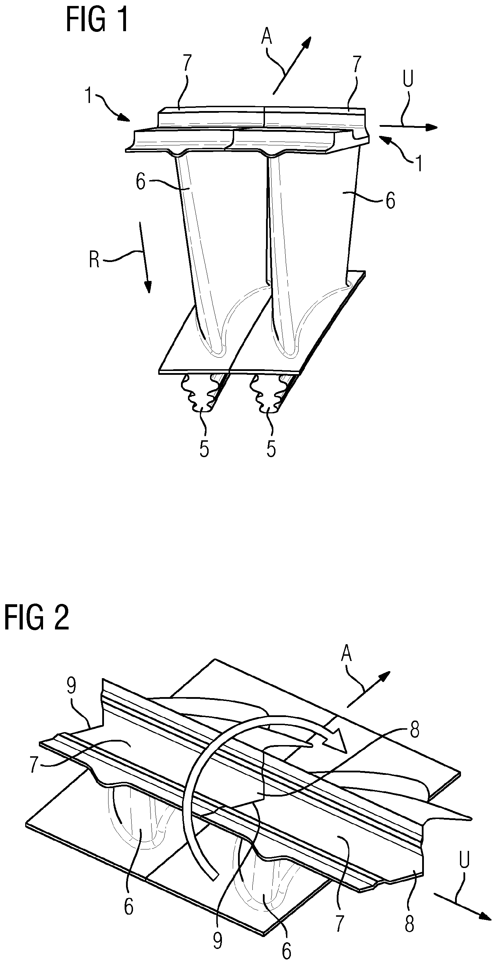

Weitere Merkmale und Vorteile der vorliegenden Erfindung werden anhand der nachfolgenden Beschreibung einer Ausführungsform des erfindungsgemäßen Verfahrens unter Bezugnahme auf die beiliegende Zeichnung deutlich. Darin ist
Figur 1 eine perspektivische Ansicht zweier benachbart angeordneter Laufschaufeln,
Figur 2 eine vergrößerte schematische Ansicht zweier Deckbänder der in Figur 1 dargestellten Laufschaufeln;
Figur 3 eine vergrößerte schematische Ansicht eines einzelnen Deckbands der in Figur 1 dargestellten Laufschaufeln;
Figur 4 eine schematische Seitenansicht eines Teilbereiches einer Spannvorrichtung, deren Spannelemente sich in einer ersten Stellung befinden;
Figur 5 eine schematische Seitenansicht der in Figur 4 dargestellten Spannvorrichtung, deren Spannelemente sich in einer zweiten Stellung befinden;
Figur 6 eine Querschnittansicht entlang der Linie VI-VI in Figur 5;
Figur 7 eine schematische Seitenansicht von an der in den Figuren 4 bis 6 dargestellten Spannvorrichtung gehaltenen Laufschaufel während der Montage auf einer Rotorscheibe; und
Figur 8 eine schematische Seitenansicht, welche die Anordnung gemäß Figur 7 nach Entfernen der Spannvorrichtung zeigt.

Das nachfolgend beschriebene Verfahren gemäß einer Ausführungsform der vorliegenden Erfindung dient dazu, Laufschaufeln 1 an einer Rotorscheibe 2 entlang eines vorbestimmten Teilkreisdurchmessers D derart zu montieren, dass Deckbänder benachbarter Laufschaufeln 1 im bestimmungsgemäß an der Rotorscheibe 2 montierten und kalten Zustand gegeneinander mit einer vorbestimmten Vorspannung verspannt sind, wozu erfindungsgemäß eine Spannelemente 3 aufweisende Spannvorrichtung 4 eingesetzt wird.

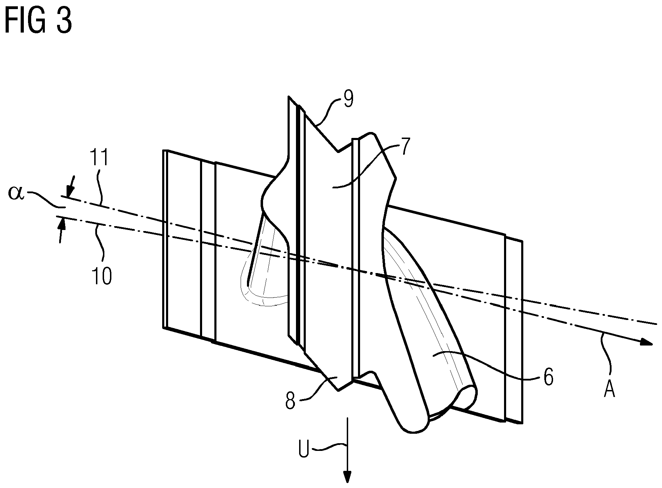

Die Laufschaufeln 1 umfassen in bekannter Weise jeweils einen Schaufelfuß 5, ein Schaufelblatt 6 und ein Deckband 7. Die Deckbänder 7 benachbarter Laufschaufeln 1 sind an ihren zueinander weisenden radialen Stirnflächen mit korrespondierenden Verbindungselementen versehen, die in radialer Richtung R miteinander in Eingriff gebracht werden und in axialer Richtung A einen Hinterschnitt definieren. Vorliegend werden die Verbindungselemente durch Vorsprünge 8 einerseits und korrespondierend zu den Vorsprüngen 8 ausgebildete Ausnehmungen 9 andererseits gebildet, wobei sich die Vorsprünge 8 und die Ausnehmungen 9 jeweils über die gesamte axiale Breite eines Deckbands 7 erstrecken und in Form einer in Umfangsrichtung U weisenden Pfeilspitze vorgesehen sind. Die Laufschaufeln 1 sind derart gefertigt, dass ein gezielter Winkelversatz zwischen einer sich im Wesentlichen in axialer Richtung A erstreckenden Mittellinie 10 des Schaufelfußes 5, die in Figur 3 auf das Deckband 7 projiziert ist, und einer sich im Wesentlichen in axialer Richtung erstreckenden Mittellinie 11 des Deckbandes 7 vorliegt, der in Figur 3 als Winkel α eingezeichnet ist.

Die Rotorscheibe 2 ist in bekannter Weise entlang ihres Umfangs mit einer Vielzahl von Schaufelfußaufnahmenuten 12 versehen, die in gleichmäßigen Abständen voneinander auf dem vorbestimmten Teilkreisdurchmesser D angeordnet sind und jeweils zur Aufnahme eines Schaufelfußes 5 einer Laufschaufel 1 dienen.

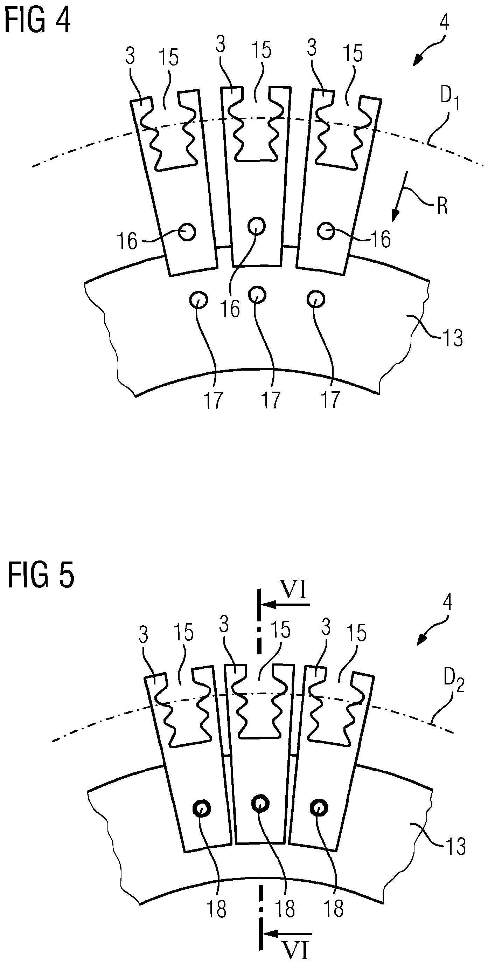

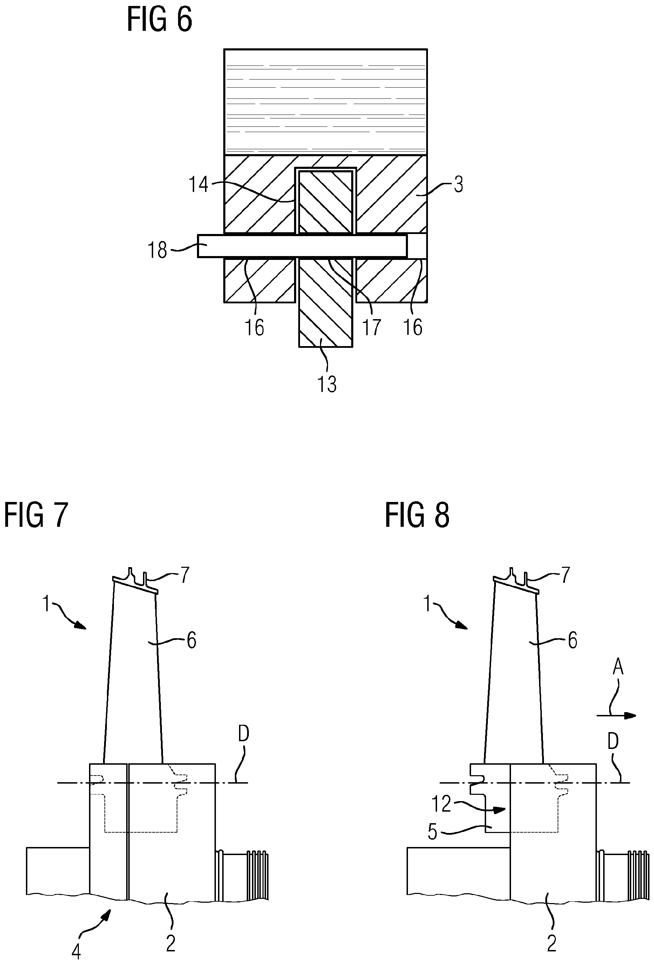

Die Spannvorrichtung 4 umfasst einen Führungsring 13, entlang dessen Umfang gleichmäßig verteilt die Spannelemente 3 um eine nicht näher dargestellte zentrale Achse angeordnet sind, wobei die Anzahl der Spannelemente 3 der Anzahl der an der Rotorscheibe 2 zu montierenden Laufschaufeln 1 entspricht. Jedes Spannelement 3 umfasst eine Führungsringaufnahmenut 14, die ausgehend von der radial innen liegenden Fläche des Spannelementes 3 radial auswärts erstreckt. Entsprechend kann jedes Spannelement 3 von außen auf den Führungsring 13 aufgesetzt werden, wie es in Figur 6 dargestellt ist. Ferner umfasst jedes Spannelement 3 eine Schaufelfußaufnahmenut 15, die im Wesentlichen analog zu den Schaufelfußaufnahmenuten 12 der Rotorscheibe 2 ausgebildet sind. Die Spannelemente 3 sind radial zwischen einer äußeren Stellung, die in Figur 4 dargestellt ist, und einer in Figur 5 gezeigten inneren Stellung unter Ausübung einer definierten Kraft bewegbar. Die äußere Stellung ist derart gewählt, dass an der Spannvorrichtung 4 gehaltene Laufschaufeln 1 entlang eines ersten Teilkreisdurchmesser D₁ angeordnet sind, der größer als der vorbestimmte Teilkreisdurchmesser D ist, und die innere Stellung derart, dass die Laufschaufeln 1 entlang eines zweiten Teilkreisdurchmessers D₂ angeordnet sind, der dem vorbestimmten Teilkreisdurchmesser D entspricht. Die radiale Bewegung der Spannelemente 3 erfolgt vorliegend synchronisiert und kann beispielsweise unter Verwendung eines Motors herbeigeführt werden, insbesondere eines Hydraulikmotors. Zur Fixierung der Spannelemente 3 in ihrer inneren radialen Stellung sind die Spannelemente 3 und der Führungsring 13 mit entsprechenden Durchgangsbohrungen 16, 17 versehen, durch die ein Fixierstift 18 eingesetzt werden kann.

Zur Montage der Laufschaufeln 1 an der Rotorscheibe 2 werden die Laufschaufeln 1 in einem ersten Schritt jeweils an einem zugeordneten Spannelement 3 der Spannvorrichtung 4 montiert, indem die Schaufelfüße 5 in die zugehörigen Schaufelfußaufnahmenuten 15 der Spannelemente 3 eingeschoben werden. Die Spannelemente 3 befinden sich dabei in ihrer äußeren radialen Stellung, so dass die Laufschaufeln 1 entlang des ersten Teilkreisdurchmessers D₁ angeordnet werden. In dieser Stellung berühren die Deckbänder 7 der Laufschaufeln 1 einander nicht.

In einem zweiten Schritt werden die Spannelemente 3 nunmehr radial einwärts in Richtung der inneren radialen Stellung bewegt, bis die Laufschaufeln 1 entlang des zweiten Teilkreisdurchmessers D₂ angeordnet sind, der dem vorbestimmten Teilkreisdurchmesser D entspricht. Während dieser radialen Einwärtsbewegung der Spannelemente 3 werden die Deckbänder 7 bis zum Erreichen des zweiten Teilkreisdurchmessers D₂ nach und nach gegeneinander verspannt, bis eine vorbestimmte Vorspannung erzielt wird. Diese wird zumindest teilweise durch eine Torsionsbewegung der Laufschaufeln 1 um ihre Längsachse herbeigeführt, die auf den zuvor beschriebenen Versatz der Mittellinien 10 und 11 der Schaufelfüße 5 und der Deckbänder 7 zurückzuführen ist. Sobald die Laufschaufeln 1 entlang des zweiten Teilkreisdurchmessers D₂ positioniert sind, werden die Spannelemente 3 in ihrer Stellung fixiert, indem die Fixierstifte 18 in die zugeordneten Durchgangsbohrungen 16 und 17 eingeführt werden. Anschließend werden die Laufschaufeln 1 an der Rotorscheibe 2 im vorgespannten Zustand montiert. Hierzu werden die Spannvorrichtung 4 und die Rotorscheibe 2 derart zueinander ausgerichtet, dass ihre Schaufelfußaufnahmenuten 12, 15 miteinander fluchten, so dass die Laufschaufeln 1 von der Spannvorrichtung 4 auf die Rotorscheibe 2 aufgeschoben werden können, wie es in Figur 7 dargestellt ist. In einem weiteren Schritt wird dann die Spannvorrichtung 4 entfernt, wie es in Figur 8 dargestellt ist. Nunmehr können die Laufschaufeln 1 vollständig auf die Rotorscheibe 2 aufgeschoben und an dieser fixiert werden.

Das erfindungsgemäße Verfahren zeichnet sich insbesondere dadurch aus, dass sich die Laufschaufeln problemlos unter Realisierung einer großen Vorspannung an der Rotorscheibe 2 fixieren lassen. Dies ist insbesondere auf das radiale Verspannen der Laufschaufeln 1 bzw. der Deckbänder 7 unter Verwendung der Spannvorrichtung 4 zurückzuführen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Montage von Laufschaufeln (1) an einer Rotorscheibe (2) entlang eines vorbestimmten Teilkreisdurchmessers (D) derart, dass Deckbänder (7) benachbarter Laufschaufeln (1) im bestimmungsgemäß an der Rotorscheibe (2) montierten und kalten Zustand gegeneinander mit einer vorbestimmten Vorspannung verspannt sind, wobei das Verfahren die aufeinander folgenden Schritte aufweist:
a) Montieren jeder Laufschaufel (1) an einem zugeordneten Spannelement (3) einer Spannvorrichtung (4) derart, dass die Laufschaufeln (1) entlang eines ersten Teilkreisdurchmessers (D₁) angeordnet sind, der größer als der vorbestimmte Teilkreisdurchmesser (D) ist, wobei die Deckbänder (7) der an den Spannelementen (3) gehaltenen Laufschaufeln (1) gegeneinander nicht oder mit einer Vorspannung verspannt sind, die geringer als die vorbestimmte Vorspannung ist,
b) Bewegen der Spannelemente (3) radial einwärts, bis die Laufschaufeln (1) entlang eines zweiten Teilkreisdurchmessers (D₂) angeordnet sind, der dem vorbestimmten Teilkreisdurchmesser (D) entspricht, wobei die Deckbänder (7) der Laufschaufeln (1) während der radialen Einwärtsbewegung der Spannelemente (3) bis zum Erreichen der vorbestimmten Vorspannung gegeneinander verspannt werden, und
c) Montage der Laufschaufeln (1) an der Rotorscheibe (2) in demjenigen Zustand, in dem die Deckbänder (7) der Laufschaufeln (1) mit der vorbestimmten Vorspannung gegeneinander verspannt sind.

2. Verfahren nach Anspruch 1, **dadurch gekennzeichnet, dass** die vorbestimmte Vorspannung in Schritt b) zumindest teilweise durch eine Torsionsbewegung der Laufschaufeln (1) um ihre Längsachse erzeugt wird.

3. Verfahren nach eine der vorhergehenden Ansprüche, **dadurch gekennzeichnet, dass** jede Laufschaufel (1) einen Schaufelfuß (5) umfasst, wobei die Rotorscheibe (2) und die Spannelemente (3) jeweils zu den Schaufelfüßen korrespondierend ausgebildete Schaufelfußaufnahmenuten (12, 15) aufweisen, die nach Durchführung des Schrittes b) derart miteinander fluchtend angeordnet werden können, dass die an den Spannelementen (3) gehaltenen Laufschaufeln (1) in Schritt c) aus den Schaufelaufnahmenuten (15) der Spannvorrichtung (4) in die Schaufelaufnahmenuten (12) der Rotorscheibe (2) geschoben werden können.

4. Verfahren nach einem der vorhergehenden Ansprüche, **dadurch gekennzeichnet, dass** die Deckbänder (7) benachbarter Laufschaufeln (1) an ihren zueinander weisenden radialen Stirnflächen mit korrespondierenden Verbindungselementen versehen sind, die in radialer Richtung miteinander in Eingriff gebracht werden können und in axialer Richtung einen Hinterschnitt definieren.

5. Verfahren nach Anspruch 4, **dadurch gekennzeichnet, dass** korrespondierende Verbindungselemente durch einen Vorsprung (8) und eine korrespondierend zum Vorsprung (8) ausgebildete Ausnehmung (9) gebildet sind.

6. Verfahren nach Anspruch 5, **dadurch gekennzeichnet, dass** sich der Vorsprung (8) jeweils über die gesamte axiale Breite eines Deckbandes (7) erstreckt und insbesondere die Form einer in Umfangsrichtung weisenden Pfeilspitze aufweist.

7. Spannvorrichtung (4) zur Durchführung eines Verfahrens nach einem der vorhergehenden Ansprüche, die mehrere gleichmäßig verteilt um eine zentrale Achse angeordnete Spannelemente (3) aufweist, deren Anzahl der Anzahl der an der Rotorscheibe (2) zu montierenden Laufschaufeln (1) entspricht und die jeweils zur Aufnahme einer Laufschaufel (1) ausgelegt sind, wobei die Spannelemente (3) zur Durchführung des Schrittes b) radial unter Ausübung einer radial einwärts gerichteten Kraft bewegbar sind.

8. Spannvorrichtung (4) nach Anspruch 7, **dadurch gekennzeichnet, dass** die Spannelemente (3) mit Schaufelfußaufnahmenuten (15) versehen sind, die jeweils zur Aufnahme eines Schaufelfußes (5) einer Laufschaufel (1) ausgelegt sind.

9. Spannvorrichtung (4) nach Anspruch 7 oder 8, **dadurch gekennzeichnet, dass** zumindest eine Arretiereinrichtung vorgesehen ist, die zum Arretieren der entlang des zweiten Teilkreisdurchmessers (D₂) angeordneten Spannelemente (3) ausgelegt ist.

## Claims

1. Method for mounting rotor blades (1) on a rotor disk (2) along a predetermined pitch circle diameter (D) in such a way that shrouds (7) of adjacent rotor blades (1) mounted on the rotor disk (2) in the intended manner and in the cold state are clamped against each other with a predetermined pretension, wherein the method features the consecutive steps:
a) mounting each rotor blade (1) on an associated clamping element (3) of a clamping device (4) in such a way that the rotor blades (1) are arranged along a first pitch circle diameter (D₁) which is larger than the predetermined pitch circle diameter (D), wherein the shrouds (7) of the rotor blades (1) which are retained on the clamping elements (3) are not clamped against each other or with a pretension which is lower than the predetermined pretension,
b) moving the clamping elements (3) radially inward until the rotor blades (1) are arranged along a second pitch circle diameter (D₂) which corresponds to the predetermined pitch circle diameter (D), wherein the shrouds (7) of the rotor blades (1) are clamped against each other during the radial inward movement of the clamping elements (3) until achieving the predetermined pretension, and
c) mounting the rotor blades (1) on the rotor disk (2) in that state in which the shrouds (7) of the rotor blades (1) are clamped against each other with the predetermined pretension.

2. Method according to Claim 1, **characterized in that** the predetermined pretension in step b) is at least partially created by means of a twisting movement of the rotor blades (1) around their longitudinal axis.

3. Method according to one of the preceding claims, **characterized in that** each rotor blade (1) comprises a blade root (5), wherein the rotor disk (2) and the clamping elements (3) have in each case blade root locating slots (12, 15), which are designed to correspond to the blade roots and which after carrying out step b) can be arranged in alignment with each other in such a way that the rotor blades (1) which are retained on the clamping elements (3) can be pushed out of the blade locating slots (15) of the clamping device (4) into the blade locating slots (12) of the rotor disk (2) in step c).

4. Method according to one of the preceding claims, **characterized in that** the shrouds (7) of adjacent rotor blades (1) are provided on their radial end faces pointing toward each other with corresponding connecting elements which can be brought into engagement with each other in the radial direction and define an undercut in the axial direction.

5. Method according to Claim 4, **characterized in that** corresponding connecting elements are formed by a projection (8) and by a recess (9) which is designed to correspond to the projection (8).

6. Method according to Claim 5, **characterized in that** the projection (8) extends in each case over the entire axial width of a shroud (7) and especially has the shape of an arrow point which points in the circumferential direction.

7. Clamping device (4) for implementing a method according to one of the preceding claims, which has a plurality of clamping elements (3) which are arranged in a uniformly distributed manner around a central axis, the number of which corresponds to the number of rotor blades (1) to be mounted on the rotor disk (2) and which in each case are designed for the locating of a rotor blade (1), wherein for carrying out step b) the clamping elements (3) can be moved radially, exerting a radially inwardly directed force.

8. Clamping device (4) according to Claim 7, **characterized in that** the clamping elements (3) are provided with blade root locating slots (15) which are designed in each case for locating a blade root (5) of a rotor blade (1).

9. Clamping device (4) according to either of Claims 7 and 8, **characterized in that** provision is made for at least one locking device which is designed for locking the clamping elements (3) which are arranged along the second pitch circle diameter (D₂).

## Revendications

1. Procédé de montage d'aubes (1) rotoriques sur une disque (2) de rotor, le long d'un diamètre (D) de cercle primitif déterminé à l'avance, de manière à ce que des bandes (7) de recouvrement d'aubes (1) rotoriques voisines soient montées conformément à ce qui est prévu sur le disque (2) de rotor et soient bloquées à l'état froid, les unes contre les autres, à une précontrainte déterminée à l'avance, le procédé ayant les stades successifs suivants :
a) monter chaque aube (1) rotorique sur un élément (3) de blocage associé d'un dispositif (4) de blocage, de manière à disposer les aubes (1) rotoriques le long d'un premier diamètre (D₁) de cercle primitif plus grand que le diamètre (D) de cercle primitif déterminé à l'avance, les bandes (7) de recouvrement des aubes (1) rotoriques, maintenues sur les éléments (3) de blocage, n'étant pas bloquées les unes par rapport aux autres ou étant bloquées à une précontrainte, qui est plus petite que la précontrainte déterminée à l'avance,
b) déplacement des éléments (3) de blocage radialement vers l'intérieur jusqu'à ce que les aubes (1) rotoriques soient disposées le long d'un deuxième diamètre (D₂) de cercle primitif, qui correspond au diamètre (D) de cercle primitif déterminé à l'avance, les bandes (7) de recouvrement des aubes (1) rotoriques étant bloquées les unes contre les autres pendant le déplacement radial vers l'intérieur des éléments (3) de blocage, jusqu'à atteindre la précontrainte déterminée à l'avance,
c) montage des aubes (1) rotoriques sur le disque (2) de rotor, dans l'état dans lequel les bandes (7) de recouvrement des aubes (1) rotoriques sont bloquées les unes contre les autres à la précontrainte déterminée à l'avance.

2. Procédé suivant la revendication 1, **caractérisé en ce que** l'on produit la précontrainte déterminée à l'avance au stade b), au moins en partie, par un mouvement de torsion des aubes (1) rotoriques autour de leur axe longitudinal.

3. Procédé suivant l'une des revendications précédentes, **caractérisé en ce que** chaque aube (1) rotorique comprend une emplanture (5) d'aube, les disques (2) de rotor et les éléments (3) de blocage ayant des rainures (12, 15) de réception d'emplanture d'aube, constituées de manière correspondante aux emplantures d'aube, rainures qui, après avoir effectué le stade b), peuvent être disposées en alignement les unes avec les autres, de manière à pouvoir déplacer les aubes (1) rotoriques, maintenues sur les éléments (3) de blocage au stade c), des rainures (15) de réception d'aube du dispositif (4 ) de blocage aux rainures (2) de réception d'aube du disque (2) de rotor.

4. Procédé suivant l'une des revendications précédentes, **caractérisé en ce que** les bandes (7) de recouvrement d'aubes (1) rotoriques voisines sont pourvues, sur leurs surfaces frontales radiales tournées l'une vers l'autre, d'éléments de liaison correspondants, qui peuvent être mis en prise les uns avec les autres dans la direction radiale et qui définissent une contre-dépouille dans la direction axiale.

5. Procédé suivant la revendication 4, **caractérisé en ce que** des éléments de liaison correspondants sont formés par une saillie (8) et un évidement (9) constitué de manière correspondante à la saillie (8).

6. Procédé suivant la revendication 5, **caractérisé en ce que** la saillie (8) s'étend respectivement sur toute la largeur axiale d'une bande (7) de recouvrement et a notamment la forme d'une pointe de flèche pointant dans la direction périphérique.

7. Dispositif (4) de blocage pour effectuer un procédé suivant l'une des revendications précédentes, qui a plusieurs éléments (3) de blocage, répartis uniformément autour d'un axe central, dont le nombre correspond au nombre des aubes (1) rotoriques à monter sur le disque (2) de rotor et qui sont conçues chacun pour recevoir une aube (1) rotorique, les éléments (3) de blocage pouvant être, pour effectuer le stade b), déplacés radialement en appliquant une force dirigée radialement vers l'intérieur.

8. Dispositif (4) de blocage suivant la revendication 7, **caractérisé en ce que** les éléments (3) de blocage sont pourvus de rainures (15) de réception d'emplanture d'aube, qui sont conçues chacune pour recevoir une emplanture (5) d'une aube (1) rotorique.

9. Dispositif (4) suivant la revendication 7 ou 8, **caractérisé en ce qu'**il est prévu au moins un dispositif d'arrêt, qui est conçu pour arrêter les éléments (3) de blocage, disposés le long du deuxième diamètre (D₂) de cercle primitif.
